# EUROPÄISCHE PATENTSCHRIFT

(11) **EP 2 285 550 B1**
(45) Veröffentlichungstag und Bekanntmachung des Hinweises auf die Patenterteilung: **28.08.2013**
(21) Anmeldenummer: 09761346.7
(22) Anmeldetag: 06.04.2009
(51) Int. Cl.: B29C 51/12, B60K 15/03, B60K 15/035, B29C 49/20, B29C 51/10

(54) **VERFAHREN ZUR HERSTELLUNG VON HOHLKÖRPERN AUS THERMOPLASTISCHEM KUNSTSTOFF SOWIE VORRICHTUNG ZUR HERSTELLUNG VON HOHLKÖRPERN AUS THERMOPLASTISCHEN KUNSTSTOFF**
METHOD FOR PRODUCING HOLLOW BODIES FROM THERMOPLASTIC PLASTIC AND DEVICE FOR PRODUCING HOLLOW BODIES FROM THERMOPLASTIC PLASTIC
PROCÉDÉ DE FABRICATION DE CORPS CREUX EN MATIÈRE THERMOPLASTIQUE ET DISPOSITIF DE FABRICATION DE CORPS CREUX EN MATIÈRE THERMOPLASTIQUE

(30) Priorität: 11.06.2008 DE 102008027824
(43) Veröffentlichungstag der Anmeldung: 23.02.2011
(73) Patentinhaber: Kautex Textron GmbH & Co. KG, 53229 Bonn (DE)
(72) Erfinder: BUCHHOLZ, Thomas, 51469 Bergisch Gladbach (DE); EULITZ, Dirk, 53115 Bonn (DE); LORENZ, Harald, 53474 Bad Neuenahr-Ahrweiler (DE); WOLTER, Gerd, 53639 Königswinter (DE)
(74) Vertreter: polypatent BGL
(86) Internationale Anmeldenummer: PCT/EP2009/002509
(87) Internationale Veröffentlichungsnummer: WO 2009/149783

(56) Entgegenhaltungen:
- EP-A- 0 595 158
- EP-A- 1 184 157
- EP-A- 1 211 196
- WO-A-2008/145246
- DE-A1- 10 010 900
- DE-A1- 10 231 866

## Beschreibung

Die Erfindung betrifft ein Verfahren zur Herstellung von Hohlkörpern aus thermoplastischem Kunststoff, bei welchem bahn- oder bänderförmige Vorformlinge aus plastifiziertem Kunststoff in einem mehrteiligen, ein Formnest bildenden Werkzeug mit zwei Außenformen und einer Mittelform, die zueinander Öffnungs- und Schließbewegungen vollziehen, umgeformt werden, wobei die Mittelform mit wenigstens einer Einrichtung zur Aufnahme und Handhabung von im Inneren des Hohlkörpers stoff- und/oder formschlüssig zu befestigenden Bauteilen versehen ist, wobei die Vorformlinge zunächst innerhalb des Werkzeugs gegen eine einen Teil des Formnests begrenzende Kontur der Außenformen mittels Differenzdruck angelegt und ausgeformt werden, in einem folgenden Verfahrensschritt mittels der Handhabungsvorrichtung in dem Hohlkörper zu fixierende Bauteile an der dem Formnest zugekehrten Wandung der Zwischenerzeugnisse befestigt werden und anschließend die jeweils die Teile des Hohlkörpers bildenden Zwischenerzeugnisse zu einem fertigen Erzeugnis verbunden werden.

Die Erfindung betrifft weiterhin eine Vorrichtung zur Herstellung von Hohlkörpern aus thermoplastischem Kunststoff, insbesondere zur Durchführung des zuvor beschriebenen Verfahrens.

Beim Extrusionsblasformen von Kunststofferzeugnissen werden üblicherweise Formwerkzeuge verwendet, die zwei Formhälften umfassen, welche komplementär zueinander ausgebildet sind und gemeinsam ein Formnest begrenzen. Ein thermoplastisches Extrudat, meist in Form eines Schlauchs, wird zwischen die geöffneten Hälften des Werkzeugs gebracht. Das Werkzeug schließt sich um den Vorformling, dieser wird innerhalb des Werkzeugs an die Innenwandung der von dem Werkzeug gebildeten Kavität angelegt, sodass der fertige Artikel eine äußere Gestalt aufweist, die der inneren Kontur des Formwerkzeugs entspricht. Die Umformung des Vorformlings innerhalb der Kavität des Werkzeugs erfolgt entweder durch Aufweitung des Vorformlings mittels Gasdruck oder Anlegen des Vorformlings an die Innenwandung des Werkzeugs mittels Unterdruck, der über Kanäle in der Forminnenwandung aufgebracht wird.

Sind Bauteile innerhalb eines so zu fertigenden Erzeugnisses zu platzieren, so wird das betreffende Teil mittels eines Halters zwischen den geöffneten Formhälften platziert, derart, dass das schlauchförmige Extrudat das zu umblasende Bauteil umgibt. Die Formhälften schließen sich dann um den Schlauch und um das von diesem aufgenommene Bauteil. Je nach Art der Befestigung des Bauteils innerhalb des zu fertigenden Behälters sind weitere Schieber, Bauteilhalter, Stempel oder dergleichen erforderlich.

Bei einem ebenso bekannten Verfahren zum Extrusionsblasformen von Hohlkörpern werden bahn- oder bänderförmige Extrudate oberhalb eines geöffneten Werkzeugs fortlaufend in dieses extrudiert oder diese mittels eine Manipulators in noch plastischem Zustand von einem Extruder abgenommen und zwischen die geöffneten Teile des Werkzeugs eingeführt. Ein solches Verfahren bietet im Hinblick auf das Einbringen von Einbauteilen in den zu fertigenden Behälter Vorteile.

Ein solches Verfahren ist beispielsweise aus der DE 10 2006 031 902 (hinterlegt beim Deutschen Patent- und Markenamt am 07.07.2006) bekannt. Auf diese Offenbarung wird hier vollinhaltlich Bezug genommen. Bei dem aus der DE 10 2006 031 902 bekannten Verfahren werden bahn- oder bänderförmige Vorformlinge aus plastifiziertem Kunststoff in einem mehrteiligen, ein Formnest bildenden Werkzeug durch Aufweiten und Anlegen der Vorformlinge an die Innenkontur des Formnests umgeformt. Zunächst erfolgt die Ausbildung zweier zueinander komplementärer Zwischenerzeugnisse in Form von Schalen. Anschließend werden an den in Einbaulage jeweils einander zugekehrten Innenseiten der Schalen Einbauteile befestigt. Die Schalen werden anschließend zusammengefügt und an ihren umlaufenden, flanschartigen Rändern zu dem fertigen Hohlkörper miteinander verschweißt.

Das Einbringen von Einbauteilen an die Innenwandung eines Zwischenerzeugnisses, welches durch ein zuvor beschriebenes Verfahren erhalten wurde, ist beispielsweise auch aus der US 2008/006625 A1, hinterlegt am 03.07.2007 beim USPTO, bekannt, auf die hier vollinhaltlich Bezug genommen wird.

Schließlich ist ein solches Verfahren beispielsweise aus der am 09.06.2006 beim Deutschen Patent- und Markenamt hinterlegten DE 2006 027 256 A1 bekannt, auf die hier ebenfalls vollinhaltlich Bezug genommen wird. Diese betrifft ein Formwerkzeug zur Herstellung von extrusionsblasgeformten Erzeugnissen in der zuvor beschriebenen Form. Dieses Formwerkzeug umfasst dabei zwei Außenformen und eine Mittelform. Die Außenformen und die Mittelform sind von-und zueinander im Sinne einer Öffnungs- und Schließbewegung des Werkzeugs verstellbar. Die Mittelform ist mit aus der von dieser definierten Werkzeugebene ein- und ausfahrbaren Bauteilhaltern als Handhabungsvorrichtung versehen. Die Bauteilhalter sind wiederum auf einem ebenfalls bezüglich der Mittelform verstellbaren Träger angeordnet.

Alle zuvor genannten Verfahren zeichnen sich insbesondere durch den Vorzug aus, dass das Einbringen von Einbauteilen in den zu fertigenden Behälter verhältnismäßig einfach ist. Auch andere Manipulationen an der Innenwandung des zu fertigenden Behälters sind ohne Weiteres denkbar und verhältnismäßig einfach zu realisieren.

In der praktischen Anwendung hat sich allerdings die Befestigung von Einbauteilen innerhalb des Hohlkörpers als schwierig herausgestellt. Üblicherweise besteht das thermoplastische Material zur Ausformung der Behälter aus einem Extrudat mit einer oder mehrerer Barriereschichten, Haftvermittlerschichten und Außen- und Innenschichten aus Polyethylen. Eine Befestigung von Bauteilen an der Wandung des Zwischenerzeugnisses ist entweder formschlüssig durch Verrasten, durch eine Art Vernietung, wie sie beispielsweise aus der DE 10 2006 006 469 bekannt ist, oder auch durch Verschweißen möglich. Bei der Vernietung, die vorzugsweise ohne zusätziiche Nietstempel oder dergleichen durchgeführt wird, wird das warmplastische Material des Zwischenerzeugnisses durch kreisbogenförmige Öffnungen des Einbauteils hindurchgedrückt, wo dieses die Öffnungen nach Art eines Nietkopfs hinterfließt und bei Erkaltung eine formschlüssige Verbindung bildet. Dies bietet den Vorzug, dass das Bauteil nicht aus einem kompatiblen Kunststoff im Sinne einer Verschweißbarkeit ausgebildet sein muss. Bei der Verschweißung hingegen müssen die verwendeten Kunststoffe des Einbauteils sowohl als auch des Zwischenerzeugnisses miteinander kompatibel sein. In jedem Fall ist bei dieser Art der Einbringung von Einbauteilen eine Berührung des Einbauteils mit der noch warmplastischen bzw. heißplastischen Wandung des Zwischenerzeugnisses problematisch. Bei einem ersten Kontakt kommt es zur schlagartigen bereichsweisen Abkühlung des Zwischenerzeugnisses, was im Falle der Herstellung einer Schweißverbindung zu Lasten der Qualität der Schweißverbindung geht. Darüber hinaus können durch unterschiedliche Abkühlungen der Wandung des Zwischenerzeugnisses an unterschiedlichen Stellen Einfallstellen am fertigen Erzeugnis entstehen, die ebenfalls nicht wünschenswert sind.

Ein Verfahren gemäß Oberbegriff von Anspruch 1 und eine Vorrichtung gemäß Oberbegriff von Anspruch 7 ist beispielsweise aus der WO 20081145246 bekannt. Darüber hinaus ist ein mehrstufiges Verfahren zur Herstellung von Kunststoffhohlkörpern aus Halbschalen aus der DE 102 31 866 A1 bekannt.

Der Erfindung liegt daher die Aufgabe zugrunde, ein Verfahren der zuvor beschriebenen Art dahingehend zu verbessern. Der Erfindung liegt weiterhin die Aufgabe zugrunde, eine verbesserte Vorrichtung zur Durchführung eines solchen Verfahrens bereitzustellen.

Die Erfindung wird durch die Merkmale der Ansprüche 1 und 7 definiert.

Die Erfindung umfasst ein Verfahren zur Herstellung von Hohlkörpern aus thermoplastischem Kunststoff, bei welchem bahn- oder bänderförmige Vorformlinge aus plastifiziertem Kunststoff in einem mehrteiligen, ein Formnest bildenden Werkzeug mit zwei Außenformen und einer Mittelform, die zueinander Öffnungs- und Schließbewegungen vollziehen, umgeformt werden, wobei die Mittelform mit wenigstens einer Einrichtung zur Aufnahme und Handhabung von im Inneren des Hohlkörpers stoff- und/oder formschlüssig zu befestigenden Bauteilen versehen ist, wobei die Vorformlinge zunächst innerhalb des Werkzeugs gegen eine einen Teil des Formnestes begrenzende Kontur der Außenformen mittels Differenzdruck angelegt und ausgeformt werden, in einem folgenden Verfahrenschritt mittels der Handhabungseinrichtung in dem Hohlkörper zu fixierende Bauteile an der dem Formnest zugekehrten Wandung der Zwischenerzeugnisse befestigt werden und anschließend die jeweils die Teile des Hohlkörpers bildende Zwischenerzeugnisse zu einem fertigen Erzeugnis verbunden werden, wobei das Verfahren umfasst, dass zumindest eines der in dem Hohlkörper zu befestigenden Bauteile mit wenigstens einer Heizeinrichtung vorgewärmt und im vorgewärmten Zustand an der Wandung des Zwischenerzeugnisses fixiert wird. Erfindungsgemäß ist in die Mittelform eine Heizeinrichtung integriert, mittels derer eine automatisierte Aufheizung zur Befestigung der Bauteile erfolgt.

Die Erfindung kann dahingehend zusammengefasst werden, dass eine Aufheizung der in dem zu fertigenden Hohlkörper zu befestigenden Bauteile in das Herstellungsverfahren integriert ist, und zwar unter Verwendung einer integrierten Heizeinrichtung, sodass sichergestellt ist, dass die Behälterwand sich bei der Berührung mit dem zu verschweißenden Bauteil nicht unter die optimale Schweißtemperatur abkühlt. Eine solche unzulässige Abkühlung kann unter Umständen dann eintreten, wenn das noch kalte Bauteil mit der heißplastischen bzw. warmplastischen Behälterwandung in Kontakt gelangt. In disem Falle würde keine dauerhaft haltbare stoffschlüssige Verbindung zwischen dem Bauteil und der Behälterwandung erzielt werden. Durch die erfindungsgemäße Aufheizung des betreffenden Bauteils wird gewährleistet, dass die zu verbindenden Teile eine für die Verschweißung optimale Temperatur besitzen, sodass keine unzulässige Abkühlung unter die zur Verschweißung erforderliche Temperatur stattfinden kann. Eine Aufheizung der Bauteile kann so erfolgen, dass auch eine vollflächige Verschweißung der betreffenden Fügeflächen der Bauteile mit der Behälterwandung erreicht werden kann.

Das zu befestigende Bauteil kann stoff- und/oder formschlüssig an der Wandung des Zwischenerzeugnisses befestigt werden. Bei einer ausschließlich formschlüssigen Verbindung des Bauteils mit der Behälterwandung ist eine Aufheizung des Bauteils ebenso von Vorteil, wie dies eingangs bereits beschrieben wurde.

Die Aufheizung erfolgt zweckmäßigerweise mittels Kontaktwärmeübertragung. Hierzu kann beispielsweise ein Widerstandsheizelement vorgesehen sein, dass mit der Fügefläche des betreffenden Bauteils in Berührung gebracht wird. Alternativ kann die Aufheizung mittels Strahlungswärme, beispielsweise mittels IR-Strahlung erfolgen.

Eine bevorzugte Variante des Verfahrens gemäß der Erfindung sieht die Herstellung eines Kraftstoffbehälters für Kraftfahrzeuge vor, wobei als in diesem einzubringendes Bauteil wenigstens eine Entlüftungseinrichtung mit wenigstens einem Anschlusspunkt im Behälter und mit wenigstens einer Durchführung durch die Behälterwand vorgesehen ist.

Als Entlüftungseinrichtung kann beispielsweise eine Betankungsentlüftungseinrichtung mit wenigstens einem Betankungsentlüftungsventil, einer Betankungsentlüftungsleitung und einem Anschlussfitting vorgesehen sein.

Es ist im Rahmen der Erfindung, dass alle anderen in einem Kraftstoffbehälter vorzusehenden Einbauteile in der erfindungsgemäßen Art und Weise befestigt werden können.

Eine Variante des Verfahrens gemäß der Erfindung zeichnet sich dadurch aus, dass die Befestigung der Entlüftungseinrichtung mittels der Handhabungseinrichtung in zwei in einem Winkel zueinander ausgerichteten Raumachsen erfolgt, wobei mit einer Handhabungsbewegung ein Bauteil stoff-und/oder formschlüssig an der Behälterwandung fixiert wird und wenigstens mit einer weiteren Handhabungsbewegung in einem Winkel hierzu wenigstens ein weiteres Bauteil an der Behälterwandung fixiert wird. Beispielsweise kann als zweites Bauteil ein Anschlussfitting vorgesehen sein, der mittels einer Heizeinrichtung vorgeheizt wird und anschließend die Behälterwandung durchsetzend mit dieser verbunden wird.

Die der Erfindung zugrundeliegende Aufgabe wird weiterhin gelöst durch eine Vorrichtung zur Herstellung von Hohlkörpern aus thermoplastischem Kunststoff, insbesondere zur Durchführung des zuvor beschriebenen Verfahrens, umfassend wenigstens zwei ein Formnest bildende Außenformen und wenigstens eine Mittelform, die zwischen den Außenformen platzierbar ist, wobei die Außenformen im Sinne einer Öffnungs- und Schließbewegung aufeinander zu und voneinander weg bewegbar sind und die Mittelform quer zur Öffnungs- und Schließbewegung der Außenformen verfahrbar ist sowie Mittel zur Aufnahme und Handhabung von in dem Hohlkörper anzuordnenden Bauteilen aufweist, wobei sich die Vorrichtung dadurch auszeichnet, dass wenigstens eine in die Mittelform integrierte Heizeinrichtung vorgesehen ist.

Die Heizeinrichtung kann zweckmäßigerweise als Kontaktwärmeheizeinrichtung ausgebildet sein. Hierzu können beispielsweise auf oder an der Handhabungseinrichtung Widerstandsheizelemente vorgesehen sein, die eine Aufheizung des betreffenden Teils mittels Kontaktwärmeübertragung bewirken.

Die Erfindung wird nachstehend anhand eines in den Zeichnungen dargestellten Ausführungsbeispiels erläutert.

Es zeigen:
- Figur 1: eine schematische Draufsicht auf eine Vorrichtung gemäß der Erfindung, teilweise im Schnitt,
- Figur 2: eine der Figur 1 entsprechende Ansicht, wobei die Figuren 1 und 2 das Verfahren gemäß der Erfindung veranschaulichen und
- Figur 3: eine vergrößerte schematische Ansicht der Handhabungseinrichtung gemäß der Erfindung.

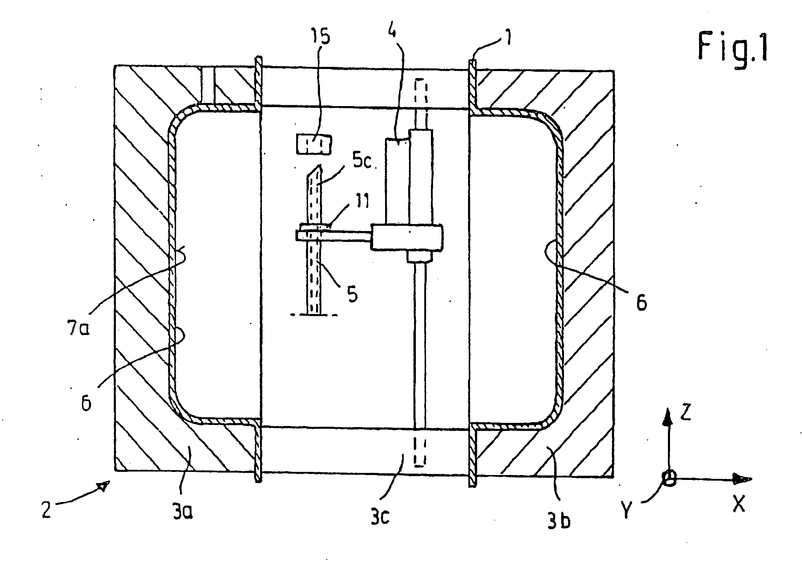

Das Verfahren gemäß der Erfindung wird zunächst anhand der Figuren 1 bis 2 erläutert. Dieses umfasst das Extrudieren zweier bahn- oder lappenförmiger Vorformlinge 1 aus thermoplastischem Kunststoff aus einem oder mehreren nicht dargestellten, über einem Werkzeug 2 angeordneten Extrudern. Dabei können die Vorformlinge durch Aufschneiden eines schlauchförmigen Vorformlings erhalten worden sein oder alternativ aus entsprechend gestalteten Düsen (Breitschlitzdüsen) extrudiert worden sein. Die Vorformlinge 1 bestehen im Wesentlichen aus einem 6-schichtigen Co-Extrudat aus Polyethylen, Rezyklat-(Regrind/Scrap)Haftvermittlerschichten und EVOH-Barriereschichten für Kohlenwasserstoffe. Das nach dem erfindungsgemäßen Verfahren herzustellende Erzeugnis ist bei dem beschriebenen Ausführungsbeispiel ein Kraftstoffbehälter aus thermoplastischem Kunststoff.

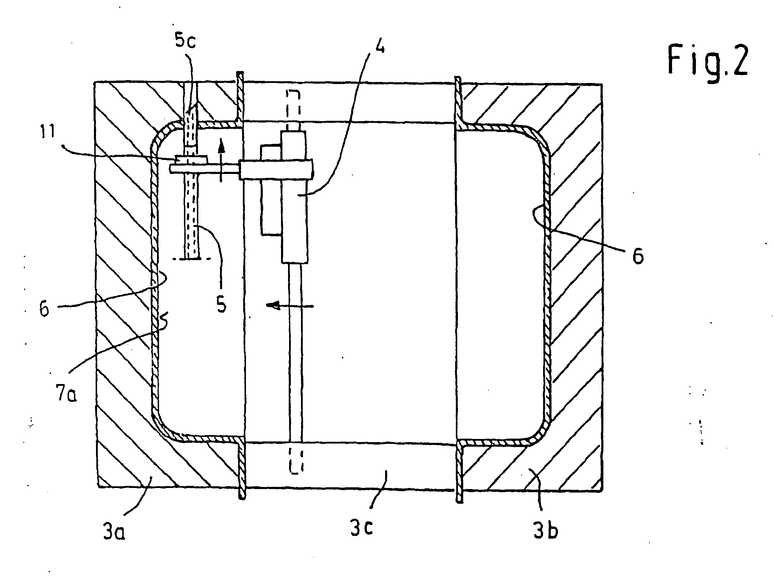

Die Vorformlinge 1 können unmittelbar oberhalb des Werkzeugs 2 in Gewichtskraftrichtung extrudiert worden sein, alternativ können diese mittels einer Handhabungsvorrichtung an einem Extrusionskopf abgenommen und in das Werkzeug 2 verbracht worden sein. Das Werkzeug 2 ist in den Figuren 1 und 2 in der Draufsicht, teilweise geschnitten dargestellt. Dieses umfasst zwei Außenformen 3a, 3b und eine Mittelform 3c in Form eines Zwischenrahmens. Die Außenformen 3a, 3b sind im Sinne einer Öffnungs- und Schließbewegung aufeinander zu und voneinander weg verfahrbar. Die Mittelform 3c ist quer hierzu verfahrbar. Die möglichen Bewegungsfreiheitsgrade der Außenformen 3a, 3b und der Mittelform 3c werden im Folgenden unter Bezugnahme auf das in Figur 1 eingezeichnete Koordinatensystem erläutert. Die Öffnungs- und Schließbewegung der Außenformen vollzieht sich in der X-Achse, wohingegen die Verfahrbewegung der Mittelform 3c sich in der Z-Achse vollzieht. Die Kinematik des Werkzeugs 2 bei dem hier beschriebenen Verfahren ist grundsätzlich aus dem Stand der Technik bekannt. Hierzu wird auf die eingangs erwähnten Bezugnahmen zum Stand der Technik verwiesen.

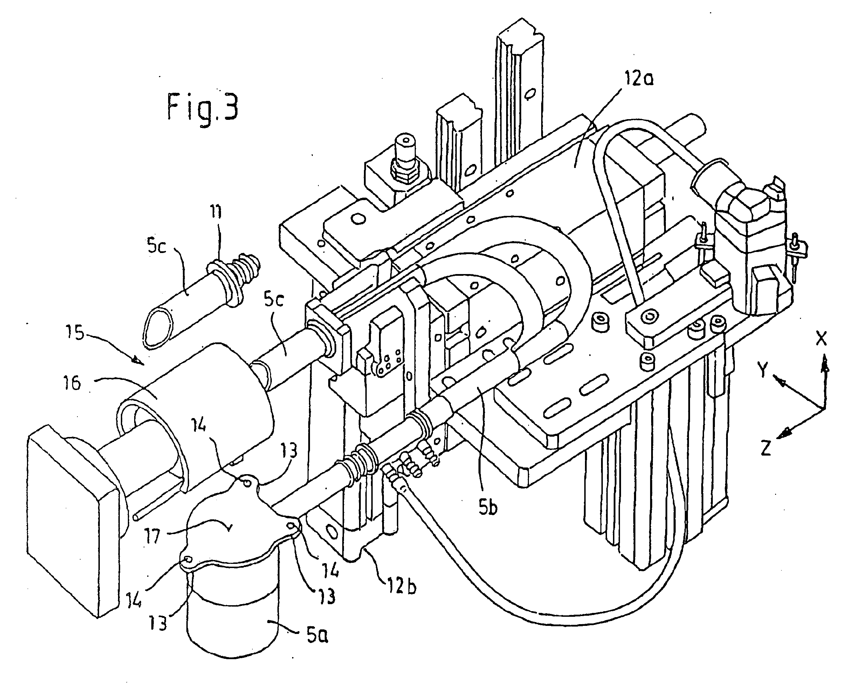

Innerhalb der Mittelform 3c ist ein pneumatisch verfahrbarer Bauteilträger 4 angeordnet, der mittels Pneumatikzylindern in der X- und Z-Achse verfahrbar ist, wobei diese (Figur 3) eine Betankungsentlüftungseinrichtung 5 des späteren Kraftstoffbehälters aufnimmt. Obwohl bei dem beschriebenen Ausführungsbeispiel die Bauteilträger mittels Pneumatikzylindern verfahrbar sind, können anstelle solcher Pneumatikzylinder auch elektromechanisch betätigte Handhabungsorgane vorgesehen sein. Alternativ ist auch der Einsatz von hydraulisch betätigten Handhabungsmitteln möglich. Der Bauteilträger 4 ist erfindungsgemäß als Handhabungseinrichtung für die im Kraftstoffbehälter zu platzierenden Bauteile, im vorliegenden Fall die Betankungsentlüftungseinrichtung 5 ausgebildet. Die Betankungsentlüftungseinrichtung 5 sei hier stellvertretend für alle anderen in einem Kraftstoffbehälter anzuordnenden Bauteile erwähnt.

Die Betankungsentlüftungseinrichtung 5 umfasst ein Betankungsentlüftungsventil 5a als Füllstandsbegrenzungsventil, eine Entlüftungsleitung 5b und einen Anschlussfitting 5c, die miteinander verbunden sind. Die Betankungsentlüftungs-einrichtung 5 ist zu Anschauungszwecken stark vereinfacht dargestellt, tatsächlich besitzt ein Kraftstoffbehälter für Kfz verschiedene Entlüftungspunkte, die untereinander mit Entlüftungsleitungen verbunden sind. Die Entlüftungspunkte sind entweder als Füllstandsbegrenzungsventile mit Roll-over-Funktion oder als einfache Betriebsentlüftungsventile ausgebildet, die über einen oder mehrere Leitungsstränge miteinander verbunden sind.

Bei dem dargestellten Ausführungsbeispiel sind Teile der Betankungsentlüftungseinrichtung 5 über erste und zweite Pneumatikzylinder 12a, 12b in den Raumachsen verfahrbar.

Figur 1 zeigt den Zeitpunkt des Herstellungsverfahrens des Kraftstoffbehälters bei gerade geschlossenem Werkzeug. Die Außenformen 3a, 3b definieren das die Behälterkontur bestimmende Formnest.

In einem ersten Verfahrensschritt werden die Außenformen 3a, 3b in Richtung der X-Achse gegen die Mittelform 3c verfahren bzw. geschlossen. Das noch warmplastische Extrudat bzw. die noch warmplastischen Vorformlinge 1 werden durch Aufbringung von Differenzdruck innerhalb des durch die Außenformen 3a, 3b definierten Formnestes innerhalb der durch die Außenformen 3a, 3b gebildeten Kavität aufgeweitet, umgeformt und an die Formwandung angelegt, sodass diese die bereits in Figur 1 eingezeichnete Lage einnehmen. Auf diese Art und Weise werden zwei schalenförmige Zwischenerzeugnisse 6 erhalten.

Über den Bauteilträger 4 wird sodann die Betankungsentlüftungseinrichtung 5 an einer Innenwandung 7a eines Zwischenerzeugnisses 6a platziert. Dabei wird zunächst das Betankungsentlüftungsventil 5a gegen die noch warmplastische Innenwandung 7a gedrückt. Das Betankungsentlüftungsventil 5a ist zu diesem Zweck an seinem Umfang mit Befestigungsfüßen 13 versehen, die jeweils mit Durchbrechungen 14 versehen sind. Beim Anpassen des Betankungsentlüftungsventils 5a gegen die noch warmplastische Innenwandung 7a des Zwischenerzeugnisses 6a durchfließt und hinterfließt das thermoplastische Extrudat die Durchbrechungen 14 der Befestigungsfüße 13 des Betankungsentlüftungsventils 5a, sodass eine form- und ggf. auch stoffschlüssige Verbindung zwischen dem Betankungsentlüftungsventil 5a und der Innenwandung 7a erzielt wird.

Der in Figur 3 vergrößert dargestellte Bauteilträger 4 umfasst, wie vorstehend bereits erwähnt wurde, wenigstens einen ersten und einen zweiten Pneumatikzylinder 12a, 12b, die mit den daran angeschlagenen Halterungen jeweils Bewegungen in sich senkrecht zueinander erstreckenden Raumachsen vollziehen können.

Der Bauteilträger 4 gemäß der Erfindung ist weiterhin mit einer Heizeinrichtung 15 versehen, die ein zylinderförmiges Hitzeschild 16 umfasst. Die Heizeinrichtung 15 ist bei dem beschriebenen Ausführungsbeispiel als Kontaktwärmering ausgebildet, der als Widerstandsbeheiztes, ringförmiges Element gegen einen umlaufenden Kragen 11 des Anschlussfittings 5c so zur Anlage gebracht wird, dass der Kragen 11 durch Kontaktwärmeübertragung aufgeheizt wird.

Mit einer ersten Handhabungsbewegung in Richtung der in Figur 3 eingezeichneten Z-Achse, eingeleitet durch die Betätigung des Pneumatikzylinders 12a, wird der Anschlussfitting 5c in die Heizeinrichtung 15 verfahren. Sodann wird der Anschlussfitting 5c mit der Heizeinrichtung 15 aufgeheizt. Durch eine weitere Handhabungsbewegung wird der Anschlussfitting 5c mit der Heizeinrichtung 15 außer Eingriff gebracht. Sodann wird die gesamte Betankungsentlüftungseinrichtung 5 bzw. die gesamte Anordnung durch Betätigen des Pneumatikzylinders 12b in Richtung der X-Achse verfahren, wobei das Betankungsentlüftungsventil 5a über seine Kontaktfläche 17 mit der Innenwandung 7a des Zwischenerzeugnisses 6a verbunden wird. Je nach für das Betankungsentlüflungsventil 5a verwendete Material kann dieses vollflächig mit der Innenwandung 7a des Zwischenerzeugnisses 6a verschweißen. Eine Verschweißung findet beispielsweise nicht statt, wenn das Betankungsentlüftungsventil 5a wie üblich aus POM (Polyoxymethylen) besteht. Anstelle dessen erfolgt eine formschlüssige Verbindung dergestalt, dass das warmplastische Material der Innenwandung 7a des Zwischenerzeugnisses 6a die Durchbrechungen 14 der Befestigungsfüße 13 durchfließt und hinterfließt.

Unmittelbar auf die Befestigung des Belüftungsventils 5a folgt eine weitere Handhabungsbewegung in Richtung der Z-Achse, wobei mittels des vorgeheizten Anschlussfittings 5c die Wandung des Zwischenerzeugnisses 6 durchstoßen wird.

Bei dem Verfahren gemäß der Erfindung ist vorgesehen, dass die Vorheizung des Anschlussfittings 5c und das Durchstoßen der Wandung des Zwischenerzeugnisses 6 mit dem Anschlussfitting 5c in unmittelbarer zeitlicher Abfolge erfolgen, sodass keine signifikante Abkühlung des Anschlussfittings 5c erfolgen kann.

Hierzu ist in der Außenform 3a eine Aufnahme 8 für die Durchdringungsspitze 9 des Anschlussfittings 5c vorgesehen. Eine stoffschlüssige Verbindung des Anschlussfittings 5c mit dem Zwischenerzeugnis 6 wird über eine Verschweißung des umlaufenden Kragens 11 des Anschlussfittings 5c mit der Innenwandung 7a des Zwischenerzeugnisses 6a erzielt.

Die Erfindung ist so zu verstehen, dass die Reihenfolge der Handhabungsbewegungen, welche über die Pneumatikzylinder 12a, 12b und ggf. über weitere Pneumatikzylinder eingeleitet werden, für die Erfindung nicht kritisch ist.

Ebenso ist das Verfahren lediglich in Bezug auf eine Aufheizung des Anschlussfittings 5c beschrieben. Das Verfahren ist selbstverständlich so zu verstehen, dass es vorteilhaft und wünschenswert ist, auch das Belüftungsventil 6a mit einer entsprechenden Heizeinrichtung vorzuheizen.

Das Verfahren ist darüber hinaus vereinfacht am Beispiel einer Betankungsentlüftungseinrichtung beschrieben worden, tatsächlich ist die Einbringung komplexer Leitungs- und Funktionsbauteilstrukturen vorgesehen. Darüber hinaus ist das Verfahren vorstehend nur in Bezug auf zwei senkrecht zueinander stehenden Handhabungsbewegungen beschrieben worden, es ist selbstverständlich, dass die Handhabungsbewegungen in beliebig verschiedenen Winkeln und in beliebiger Reihenfolge durchführbar sind, je nach Aufbau und Anordnung der Bauteilträger sowie nach Komplexität des herzustellenden Behälters.

### Bezugszeichenliste

- 1: Vorformlinge
- 2: Werkzeug
- 3a, 3b: Außenformen
- 3c: Mittelform
- 4: Bauteilträger
- 5: Betankungsentlüftungseinrichtung
- 5a: Betankungsentlüftungsventil
- 5b: Entlüftungsleitung
- 5c: Anschlussfitting
- 6a, 6b: Zwischenerzeugnisse
- 7a: Innenwandung
- 8: Aufnahme
- 9: Durchdringungsspitze
- 11: Kragen
- 12a, 12b: Pneumatikzylinder
- 13: Befestigungsfüße
- 14: Durchbrechung
- 15: Heizeinrichtung
- 16: Hitzeschild
- 17: Kontaktfläche

## Patentansprüche

1. Verfahren zur Herstellung von Hohlkörpern aus thermoplastischem Kunststoff, bei welchem bahn- oder bänderförmige Vorformlinge (1) aus plastifiziertem Kunststoff in einem mehrteiligen, ein Formnest bildenden Werkzeug (2) mit zwei Außenformen (3a, 3b) und einer Mittelform (3c), die zueinander Öffnungs- und Schließbewegungen vollziehen, umgeformt werden, wobei die Mittelform (3c) mit wenigstens einer Einrichtung zur Aufnahme und Handhabung von im Inneren des Hohlkörpers stoff-und/oder formschlüssig zu befestigenden Bauteilen in Form wenigstens eines Bauteilträgers (4) versehen ist, wobei die Vorformlinge (1) zunächst innerhalb des Werkzeugs (2) gegen eine einen Teil des Formnestes begrenzende Kontur der Außenformen (3a, 3b) mittels Differenzdruck angelegt und ausgeformt werden, in einem folgenden Verfahrenschritt mittels des Bauteilträgers (4) in dem Hohlkörper zu fixierende Bauteile an der dem Formnest zugekehrten Wandung der Zwischenerzeugnisse (6) befestigt werden und anschließend die jeweils die Teile des Hohlkörpers bildenden Zwischenerzeugnisse (6) zu einem fertigen Erzeugnis verbunden werden, wobei zumindest eines der in dem Hohlkörper zu befestigenden Bauteile mit wenigstens einer Heizeinrichtung (15) vorgewärmt und im vorgewärmten Zustand an der Wandung des Zwischenerzeugnisses (6) fixiert wird, **gekennzeichnet durch** die Verwendung einer in der Mittelform (3c) integrierten Heizeinrichtung (15), mittels derer eine automatisierte Aufheizung zur Befestigung der Bauteile (4) erfolgt.

2. Verfahren nach Anspruch 1, **dadurch gekennzeichnet, dass** das zu befestigende Bauteil stoff- und/oder formschlüssig an der Wandung des Zwischenerzeugnisses (6) befestigt wird.

3. Verfahren nach einem der Ansprüche 1 oder 2, **dadurch gekennzeichnet, dass** die Aufheizung mittels Kontaktwärmeübertragung erfolgt.

4. Verfahren nach einem der Ansprüche 1 bis 3, **gekennzeichnet durch** die Herstellung eines Kraftstoffbehälters für Kfz, wobei als in diesen einzubringendes Bauteil wenigstens eine Entlüftungseinrichtung (5) mit wenigstens einem Anschlusspunkt im Behälter und mit wenigstens einer Durchführung **durch** die Behälterwandung vorgesehen ist.

5. Verfahren nach Anspruch 4, **dadurch gekennzeichnet, dass** die Befestigung der Belüftungseinrichtung mittels der Handhabungseinrichtung in zwei in einem Winkel zueinander ausgerichteten Raumachsen erfolgt, wobei mit einer ersten Handhabungsbewegung ein erstes Bauteil stoff-und/oder formschlüssig an der Behälterwandung fixiert wird und wenigstens mit einer zweiten Handhabungsbewegung in einem Winkel zu der ersten Handhabungseinrichtung ein zweites Bauteil an der Behälterwandung fixiert wird.

6. Verfahren nach Anspruch 5, **dadurch gekennzeichnet, dass** als zweites Bauteil ein Anschlussfitting Anwendung findet, der mittels einer Heizeinrichtung (15) vorgeheizt wird und anschließend die Behälterwandung durchsetzend mit dieser verbunden wird.

7. Vorrichtung zur Herstellung von Hohlkörpern aus thermoplastischem Kunststoff, insbesondere zur Durchführung des Verfahrens nach einem der Ansprüche 1 bis 7, umfassend wenigstens zwei ein Formnest bildende Außenformen (3a, 3b) und wenigstens eine Mittelform (3c), die zwischen den Außenformen (3a, 3b) platzierbar ist, wobei die Außenformen (3a, 3b) im Sinne einer Öffnungs- und Schließbewegung aufeinander zu und voneinander weg bewegbar sind und die Mittelform (3c) quer zur Öffnungs-und Schließbewegung der Außenformen (3a, 3b) verfahrbar ist sowie Mittel zur Aufnahme und Handhabung von in dem Hohlkörper anzuordnenden Bauteilen in Form wenigstens eines Bauteilträgers (4) aufweist, **gekennzeichnet durch** wenigstens eine in die Mittelform (3c) integrierte Heizeinrichtung (15).

8. Vorrichtung nach Anspruch 7, **dadurch gekennzeichnet, dass** als Heizeinrichtung (15) ein Widerstandsheizelement vorgesehen ist.

9. Vorrichtung nach einem der Ansprüche 7 oder 8, **dadurch gekennzeichnet, dass** als Heizeinrichtung (15) ein Kontaktwärmering vorgesehen ist.

## Claims

1. Method of manufacturing hollow bodies made of thermoplastic plastic, in which web-shaped or strip-shaped preforms (1) made of plasticized plastic are reshaped in a multipart tool (2) which forms a mould cavity and has two outer moulds (3a, 3b) and a central mould (3c) which perform opening and closing movements in relation to one another, wherein the central mould (3c) is provided with at least one device, in the form of at least one component-carrier (4), for receiving and handling components which are to be fastened in the interior of the hollow body by bonding of the materials and/or in a form-locking manner, wherein the preforms (1) are first of all applied inside the tool (2), by means of differential pressure, against a contour of the outer moulds (3a, 3b) that delimits a part of the mould cavity, and given their shape; in a subsequent step of the method, components which are to be fixed in the hollow body by means of the component-carrier (4) are fastened to that wall of the intermediate products (6) which faces towards the mould cavity, and the intermediate products (6) that form the parts of the hollow body in each case are then connected to form a finished product, and wherein at least one of the components which are to be fastened in the hollow body is preheated with the aid of at least one heating device (15) and is fixed, in the preheated state, to the wall of the intermediate product (6), **characterised by** the use of a heating device (15) which is integrated in the central mould (3c) and by means of which automated heating-up takes place for the purpose of fastening the components (4).

2. Method according to Claim 1, **characterised in that** the component to be fastened is fastened, by bonding of the materials and/or in a form-locking manner, to the wall of the intermediate product (6).

3. Method according to either of Claims 1 or 2, **characterised in that** the heating-up takes place by means of contact-heat transmission.

4. Method according to one of Claims 1 to 3, **characterised by** the manufacture of a fuel tank for motor vehicles, at least one venting device (5) having at least one point of connection within the tank and having at least one lead-in through the wall of the tank being provided as the component which is to be introduced into the said tank.

5. Method according Claim 4, **characterised in that** the fastening of the venting device takes place, by means of the handling device, in two spatial axes which are oriented at an angle to one another, a first component being fixed, by means of a first handling movement, to the wall of the tank by bonding of the materials and/or in a form-locking manner, and a second component being fixed to the wall of the tank at least by means of a second handling movement at an angle to the first handling device.

6. Method according to Claim 5, **characterised in that** use is made, as the second component, of a connecting fitting which is pre-heated by means of a heating device (15) and is then connected to the wall of the tank in a manner passing through said wall.

7. Device for manufacturing hollow bodies made of thermoplastic plastic, particularly for carrying out the method according to one of Claims 1 to 7, comprising at least two outer moulds (3a, 3b), which form a mould cavity, and at least one central mould (3c) which can be positioned between said outer moulds (3a, 3b), wherein the outer moulds (3a, 3b) can be moved towards, and away from, one another for the purposes of an opening and closing movement, and the central mould (3c) can be displaced transversely to the opening and closing movement of the outer moulds (3a, 3b) and also has means, in the form of at least one component-carrier (4), for receiving and handling components which are to be arranged in the hollow body, **characterised by** at least one heating device (15) which is integrated in the central mould (3c).

8. Device according to Claim 7, **characterised in that** a resistance heating element is provided as the heating device (15).

9. Device according to either of Claims 7 or 8, **characterised in that** a contact-heat ring is provided as the heating device (15).

## Revendications

1. Procédé de fabrication de corps creux en matière plastique thermoplastique, dans lequel des ébauches (1) en forme de bandes en matière plastique plastifiée sont moulées dans un outil (2) formant une cavité de moulage, avec deux formes externes (3a, 3b) et une forme centrale (3c), qui effectuent des mouvements d'ouverture et de fermeture, la forme centrale (3c) étant munie d'au moins un dispositif de logement et de manipulation de composants à fixer à l'intérieur du corps creux par liaison de matière et/ou complémentarité de forme sous la forme d'au moins un support de composant (4), les ébauches (1) étant d'abord appuyées et déformées à l'intérieur de l'outil (2) contre un contour des formes externes (3a, 3b) délimitant une partie de la cavité de moulage, à l'aide d'une pression différentielle, les composants à fixer sont fixés dans une étape suivante à l'aide du support de composant (4) dans le corps creux sur la paroi des produits intermédiaires (6) orientée vers la cavité de moulage puis les produits intermédiaires (6) formant les parties du corps creux sont combinés en un produit fini, au moins un des composants à fixer dans le corps creux étant préchauffé avec au moins un dispositif de chauffage (15) et étant fixé, dans l'état préchauffé, à la paroi du produit intermédiaire (6), **caractérisé par** l'utilisation d'un dispositif de chauffage (15) intégré dans la forme centrale (3c), à l'aide duquel un chauffage automatique a lieu pour la fixation des composants (4).

2. Procédé selon la revendication 1, **caractérisé en ce que** le composant à fixer est fixé par liaison de matière et/ou complémentarité de forme à la paroi du produit intermédiaire (6).

3. Procédé selon l'une des revendications 1 ou 2, **caractérisé en ce que** le chauffage a lieu à l'aide d'un transfert de chaleur par contact.

4. Procédé selon l'une des revendications 1 à 3, **caractérisé par** la fabrication d'un réservoir de carburant pour véhicule automobile, le composant à insérer dans celui-ci étant au moins un dispositif de ventilation (5) avec au moins un point de raccordement dans le réservoir et étant muni d'au moins un passage à travers la paroi du réservoir.

5. Procédé selon la revendication 4, **caractérisé en ce que** la fixation du dispositif de ventilation a lieu à l'aide du dispositif de manipulation sur deux axes spatiaux formant un angle entre eux, un premier composant étant fixé, avec un premier mouvement de manipulation, par liaison de matière et/ou complémentarité de forme à la paroi du réservoir et un deuxième composant étant fixé, au moins avec un deuxième mouvement de manipulation, avec un angle par rapport au premier dispositif de manipulation, à la paroi du réservoir.

6. Procédé selon la revendication 5, **caractérisé en ce que** le deuxième composant est un raccord qui est préchauffé à l'aide d'un dispositif de chauffage (15) puis la paroi du réservoir est reliée à ce raccord de manière continue.

7. Dispositif de fabrication de corps creux en matière plastique thermoplastique, plus particulièrement pour la réalisation du procédé selon l'une des revendications 1 à 7, comprenant au moins deux formes externes (3a, 3b) formant une cavité de moulage et au moins une forme centrale (3c), qui peut être placée entre les formes externes (3a, 3b), les formes externes (3a, 3b) pouvant être rapprochées ou éloignées mutuellement dans le sens d'un mouvement d'ouverture et de fermeture et la forme centrale (3c) étant mobile transversalement par rapport au mouvement d'ouverture et de fermeture des formes externes (3a, 3b) et comprenant des éléments pour le logement et la manipulation de composants à disposer dans le corps creux, sous la forme d'au moins un support de composant (4), **caractérisé par** un dispositif de chauffage (15) intégré dans la forme centrale (3c).

8. Dispositif selon la revendication 7, **caractérisé en ce que** le dispositif de chauffage (15) est un élément de chauffage à résistance.

9. Dispositif selon l'une des revendications 7 ou 8, **caractérisé en ce que** le dispositif de chauffage (15) est une bague chauffante par contact.
